# EUROPÄISCHE PATENTANMELDUNG

(11) **EP 1 657 087 A1**
(43) Veröffentlichungstag der Anmeldung: **17.05.2006**
(21) Anmeldenummer: 05022430.2
(22) Anmeldetag: 14.10.2005
(51) Int. Cl.: B60H 1/00, F28D 20/02

(54) **Wärmetauscher mit Kältespeicherelement**

(30) Priorität: 16.11.2004 DE 102004055341
(71) Anmelder: Behr GmbH & Co. KG, 70469 Stuttgart (DE)
(72) Erfinder: Kohl, Michael, 74321 Bietigheim (DE); Manski, Ralf, 70197 Stuttgart (DE); Strauss, Thomas, 73274 Notzingen (DE)

(57) **Zusammenfassung**

Die Erfindung betrifft einen Wärmetauscher mit Kältespeicherelement (5; 15; 25), insbesondere für eine Kraftfahrzeug-Klimaanlage, der in einem Kältemittelkreislauf angeordnet ist und zum Abkühlen von zu konditionierender Luft für einen Kraftfahrzeug-Innenraum dient, wobei im Kältespeicherelement (5; 15; 25) ein Kältespeichermedium (6; 16; 26) enthalten ist. Hierbei beträgt die kleinste Abmessung des Kältespeicherelements (5; 15; 25) maximal 2,6 mm.

## Beschreibung

Die Erfindung betrifft einen Wärmetauscher mit Kältespeicherelement, insbesondere für eine Kraftfahrzeug-Klimaanlage, gemäß dem Oberbegriff des Anspruches 1.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann.

Aus der DE 101 56 944 A1 ist eine Klimaanlage für ein Kraftfahrzeug mit in einem Kältemittelkreis angeordnetem Kompressor und Verdampfer zum Abkühlen von zu konditionierender Luft für den Innenraum bekannt, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer altemativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist. Jedoch lässt eine entsprechende Klimaanlage noch Wünsche offen.

Ausgehend von diesem Stand der Technik ist es Aufgabe der Erfindung eine verbesserte Klimaanlage zur Verfügung zu stellen. Diese Aufgabe wird gelöst durch einen Wärmetauscher mit Kältespeicherelement mit den Merkmalen des Anspruchs 1. Vorteilhafte Ausgestaltungen sind Gegenstand der Unteransprüche.

Erfindungsgemäß ist ein Wärmetauscher mit Kältespeicherelement vorgesehen, insbesondere für eine Kraftfahrzeug-Klimaanlage, jedoch sind auch andere Verwendungszwecke möglich, wie beispielsweise bei einem Ladeluftkühler, der in einem Kältemittelkreislauf angeordnet ist und zum Abkühlen von zu konditionierender Luft für einen Kraftfahrzeug-Innenraum dient, wobei im Kältespeicherelement ein Kältespeichermedium enthalten ist. Hierbei beträgt erfindungsgemäß die kleinste Abmessung des Kältespeicherelements maximal 2,6 mm. Eine Dicke eines Kältespeicherelements, die maximal 2,6 mm beträgt, stellt eine optimale Dynamik beim Be- und Entladen des im Kältespeicherelements enthaltenen Kältespeichermediums sicher, so dass innerhalb kurzer Zeit ein Beladen möglich ist, womit auch bei kurzen Fahrzeiten zwischen den einzelnen Stopps, z.B. im Stadtverkehr, ein ausreichendes Beladen möglich ist, zudem jedoch eine ausreichende Kühlleistung zur Verfügung steht, die bei Bedarf schnell abgerufen werden kann. Dies ermöglicht einen großen Klimakomfort bei einem stop-and-go-Betrieb.

Die kleinste Abmessung des Kältespeicherelements beträgt vorzugsweise minimal 0,4 mm, so dass eine ausreichende Kühldauer sichergestellt werden kann.

Vorzugsweise beträgt die Wandstärke des Kältespeicherelements maximal 0,4 mm, so dass ein schnelles Be- und Entladen des Kältespeicherelements möglich ist, und der Behälter einen nur unwesentlichen Einfluss auf die Dynamik hat.

Das Verhältnis von Innenumfang in einem Schnitt quer zur Längserstreckung des Kältespeicherelements an der Innenseite zur hiervon eingeschlossenen Fläche des Kältespeicherelements beträgt vorzugsweise 1/mm bis 10/mm.

Die Wärmeleitfähigkeit der Wand des Kältespeicherelements beträgt vorzugsweise 100 bis 500 W/mK, insbesondere 200 bis 300 W/mK.

Die Wärmeleitfähigkeit des Kältespeichermediums beträgt vorzugsweise 0,1 bis 0,3 W/mK, insbesondere 0,16 bis 0,24 W/mK.

Bevorzugt ist das Kältespeicherelement durch einen Kanal eines Mehrkanal-Flachrohres gebildet, wobei der Kanal bevorzugt beabstandet vom Rand des Mehrkanal-Flachrohres angeordnet ist. Dabei ist eine asymmetrische Anordnung zu bevorzugen, wobei der Kanal, welcher das Kältespeicherelement bildet, bevorzugt mehr auf der in Strömungsrichtung der den Wärmetauscher durchströmenden Luft hinten liegenden Seite angeordnet ist. Es handelt sich hierbei vorzugsweise um den vorletzten oder den drittletzten Kanal des Mehrkanal-Flachrohres.

Beim Speichermedium handelt es sich vorzugsweise um ein PCM-Material (phase change material), das bevorzugt kongruent schmelzende Medien, insbesondere Decanol, Tetra-, Penta- oder Hexadecan, LiClO₃·3H₂O, wässrige Salzlösungen oder organische Hydrate enthält oder hieraus gebildet ist. Im Speichermedium können auch Keimbildner vorgesehen sein, welche die Kristallbildung beschleunigen.

Die Phasenumwandlungstemperatur des Kältespeichermediums liegt vorzugsweise in einem Bereich von 0°C bis 30°C, insbesondere von 2°C bis 15°C, insbesondere bevorzugt von 4°C bis 12°C. Dadurch wird sichergestellt, dass der Wärmetauscher nicht vereist.

Im Inneren des Kältespeicherelements kann neben dem Kältespeichermedium auch eine Einlage mit einer hohen Oberfläche, wie beispielsweise ein Rippenblech, eine Turbulenzeinlage, ein Gestrick, ein Vlies oder ein Schaum angeordnet sein, welche eine Strömungsausbildung im Kältespeichermedium be- oder gar verhindert.

Die Verwendung eines derartigen Wärmetauschers mit Kältespeicherelement(en) kann auch in anderen Bereichen erfolgen, bei denen ein zeitlich begrenzter Temperaturausgleich in Sonderfällen auftritt.

Im Folgenden wird die Erfindung anhand dreier Ausführungsbeispiele unter Bezugnahme auf die Zeichnung im Einzelnen erläutert. Es zeigen:
- Fig. 1: einen Schnitt durch eine Scheibe eines Kältemittelverdampfers gemäß dem ersten Ausführungsbeispiel mit einem Kältemittel-Strömungskanal und einem Kältespeicherelement,
- Fig. 2: einen Schnitt durch ein Flachrohr eines Kältemittelverdampfers gemäß dem zweiten Ausführungsbeispiel mit einer Mehrzahl von Kältemittel-Strömungskanälen und einem Kältespeicherelement,
- Fig. 3: einen Schnitt durch ein Flachrohr eines Kältemittelverdampfers gemäß dem dritten Ausführungsbeispiel mit fünf Kältemittel-Strömungskanälen und einem Kältespeicherelement,
- Fig. 4: einen schematisch dargestellten Schnitt durch ein Kältespeicherelement mit einer Rippenblech-Einlage gemäß einer ersten Variante des ersten Ausführungsbeispiels,
- Fig. 5: einen schematisch dargestellten Schnitt durch ein Kältespeicherelement mit einer Vlies-Einlage gemäß einer zweiten Variante des ersten Ausführungsbeispiels, und
- Fig. 6: einen schematisch dargestellten Schnitt durch ein Kältespeicherelement mit einer Metallschaum-Einlage gemäß einer dritten Variante des ersten Ausführungsbeispiels.

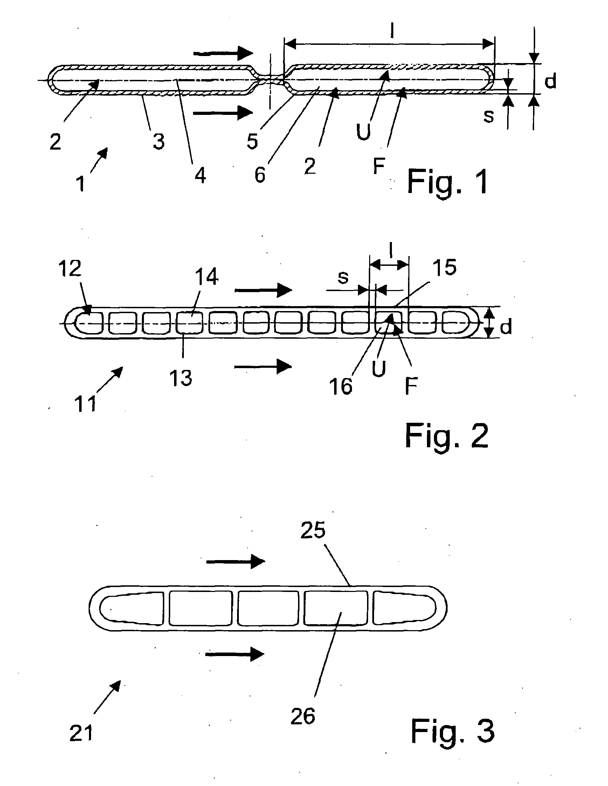

Eine erfindungsgemäße Klimaanlage, wie sie vom Prinzip her beispielsweise aus der DE 101 56 944 A1 bekannt ist, weist einen Wärmetauscher in Scheibenbauweise mit einer Mehrzahl von kältemittelführenden Scheiben 1 auf, wobei die Scheiben 1 vorliegend zwei Kanäle 2 aufweisen, nämlich einen Kanal 3, in welchem das Kältemittel 4 strömt, und einen Kanal, im Folgenden auch als Kältespeicherelement 5, in welchem ein Kältespeichermedium 6, vorliegend eine Salzlösung, enthalten ist. Die abzukühlende Luft strömt senkrecht zu den Kanälen 2. Das Kältespeicherelement 5 ist - in Strömungsrichtung der Luft gesehen, die in Fig. 1 durch Pfeile angedeutet ist - nach dem Kanal 3 angeordnet. Der Aufbau des Wärmetauschers unterscheidet sich ― abgesehen von der im Folgenden beschriebenen Ausgestaltung der Scheibe 1 und der hieraus resultierenden veränderten Anschlüsse, welche für das Kältespeichermedium 6 mangels Zirkulation entfallen - nicht von dem eines herkömmlichen Wärmetauschers, auch in Hinblick auf das verwendete Material, vorliegend Aluminium.

Das Kältespeicherelement 5 weist gemäß dem vorliegenden Ausführungsbeispiel eine Dicke d von 1,9 mm und eine Länge I von ca. 12 mm auf, wobei die Wandstärke s 0,26 mm beträgt. Der Innenumfang U des Kältespeicherelements 5 in einem Schnitt quer zur Längserstreckung des Kältespeicherelements 5 beträgt ca. 24 mm und die entsprechende Innenfläche F beträgt ca. 15 mm², so dass sich ein Verhältnis von U/F von ca. 1,6/mm ergibt.

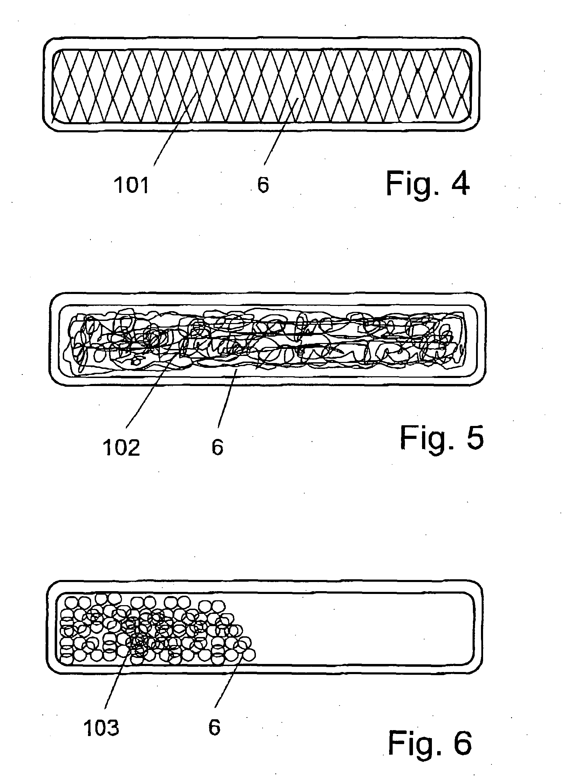

Im Inneren des Kältespeicherelements 5 ist gemäß einer in Fig. 4 dargestellten Variante ein Rippenblech 101 angeordnet, welches eine Querströmung des Kältespeichermediums 6 erschwert. Das Rippenblech 101 besteht vorliegend aus Aluminium, jedoch sind auch andere Metalle oder Kunststoffe geeignet. Das Rippenblech 101 kann auch als Turbulenzeinlage ausgebildet sein, so dass eine gegebenenfalls auftretende Strömung im Inneren des Kältespeicherelements 5 verwirbelt wird.

Gemäß einer zweiten, in Fig. 5 dargestellten Variante ist im Inneren des Kältespeicherelements 5 ein Vlies 102, vorliegend aus Kunststoff, angeordnet, welches ebenfalls eine Strömung des Kältespeichermediums 6 verhindert. Altemativ kann auch ein Gestrick o.ä. vorgesehen sein, beispielsweise aus Metall oder Kunststoff.

In Fig. 6 ist eine dritte Variante dargestellt, gemäß welcher im Kältespeicherelement 5 ein Schaum 103, vorliegend ein Metallschaum, vorgesehen ist. Ebenso kann ein Schaum aus Kunststoff im Inneren des Kältespeicherelements 5 vorgesehen sein, welcher eine Strömungsausbildung des Kältespeichermediums 6 be- oder gar verhindert.

Gemäß dem zweiten, in Fig. 2 dargestellten Ausführungsbeispiel ist ein Wärmetauscher in Flachrohrbauweise vorgesehen, wobei die Flachrohre 11 als Mehrkammerrohre mit fluiddicht voneinander getrennten Kanälen 12 ausgebildet sind. Vorliegend sind zwölf Kanäle 12 in einem Flachrohr 11 vorgesehen, wobei in elf Kanälen 13 das Kältemittel 14 strömt und in einem Kanal, welcher als Kältespeicherelement 15 dient, ein Kältespeichermedium 16, vorliegend als PCM-Material, enthalten ist, welches nicht zirkuliert.

Die Enden des als Kältespeicherelement 15 dienenden Kanals sind dicht verschlossen. Das Kältespeicherelement 15 ist gemäß dem zweiten Ausführungsbeispiel außermittig angeordnet, wobei es in Luftströmungsrichtung, die in Fig. 2 durch Pfeile angedeutet ist, verschoben ist, so dass es als drittletzter Kanal 12 angeordnet ist.

Die Dicke d beträgt vorliegend 1,3 mm, die Wandstärke bzw. Stegbreite s 0,2 mm und die Länge I 1,09 mm, so dass sich ein in einem Schnitt quer zur Längserstreckung des Kältespeicherelements 15 angeordneter Innenumfang. von ca. 4 mm und eine entsprechende Innenfläche F von ca. 1 mm² und somit ein Verhältnis von U/F von ca. 4/mm ergibt.

Das dritte, in Fig. 3 dargestellte Ausführungsbeispiel entspricht im Wesentlichen dem zweiten Ausführungsbeispiel, wobei nur fünf Kanäle 22 vorgesehen sind und sich das Kältespeichermedium 26 im - in Strömungsrichtung der Luft gesehen - vorletzten Kanal befindet. Die Dicke d beträgt vorliegend 2,5 mm, die Wandstärke bzw. Stegbreite s 0,3 mm und die Länge 13,5 mm, so dass sich ein in einem Schnitt quer zur Längserstreckung des Kältespeicherelements 25 angeordneter Innenumfang von ca. 10 mm und eine entsprechende Innenfläche F von ca. 6 mm² und somit ein Verhältnis von U/F von ca. 1,7/mm ergibt.

### Bezugszeichenliste

1 Scheibe
2, 12, 22 Kanal
3, 13 kältemittelführender Kanal
4, 14 Kältemittel
5, 15, 25 Kältespeicherelement
6, 16, 26 Kältespeichermedium
11 Flachrohr
d Dicke
F Innenfläche
I Länge
s Wandstärke/Stegbreite
U Innenumfang

## Patentansprüche

1. Wärmetauscher mit Kältespeicherelement (5; 15; 25), insbesondere für eine Kraftfahrzeug-Klimaanlage, der in einem Kältemittelkreislauf angeordnet ist und zum Abkühlen von zu konditionierender Luft für einen Kraftfahrzeug-Innenraum dient, wobei im Kältespeicherelement (5; 15; 25) ein Kältespeichermedium (6; 16; 26) enthalten ist, **dadurch gekennzeichnet, dass** die kleinste Abmessung des Kältespeicherelements (5; 15; 25) maximal 2,6 mm beträgt.

2. Wärmetauscher nach Anspruch 1, **dadurch gekennzeichnet, dass** die kleinste Abmessung des Kältespeicherelements (5; 15; 25) minimal 0,4 mm beträgt.

3. Wärmetauscher nach Anspruch 1 oder 2, **dadurch gekennzeichnet, dass** die Wandstärke (s) des Kältespeicherelements (5; 15; 25) maximal 0,4 mm beträgt.

4. Wärmetauscher nach einem der vorhergehenden Ansprüche, **dadurch gekennzeichnet, dass** das Verhältnis von Innenumfang (U) in einem Schnitt quer zur Längserstreckung des Kältespeicherelements (5; 15; 25) zur hiervon eingeschlossenen Fläche (F) des Kältespeicherelements (5; 15; 25) 1/mm bis 10/mm beträgt.

5. Wärmetauscher nach einem der vorhergehenden Ansprüche, **dadurch gekennzeichnet, dass** die Wärmeleitfähigkeit der Wand des Kältespeicherelements (5; 15; 25) 100 bis 500 W/mK, insbesondere 200 bis 300 W/mK, beträgt.

6. Wärmetauscher nach einem der vorhergehenden Ansprüche, **dadurch gekennzeichnet, dass** die Wärmeleitfähigkeit des Kältespeichermediums (6; 16; 26) 0,1 bis 0,3 W/mK, insbesondere 0,16 bis 0,24 W/mK, beträgt.

7. Wärmetauscher nach einem der vorhergehenden Ansprüche, **dadurch gekennzeichnet, dass** das Kältespeicherelement (16; 26) durch einen Kanal (12; 22) eines Mehrkanal-Flachrohres (11; 21) gebildet ist.

8. Wärmetauscher nach Anspruch 7, **dadurch gekennzeichnet, dass** der Kanal (12; 22), welcher das Kältespeicherelement (16; 26) bildet, mindestens um einen Kanal (12; 22) beabstandet vom Rand des Mehrkanal-Flachrohres (11; 21) angeordnet ist.

9. Wärmetauscher nach einem der vorhergehenden Ansprüche, **dadurch gekennzeichnet, dass** das Kältespeichermedium (6; 16; 26) durch ein PCM-Material gebildet ist.

10. Wärmetauscher nach einem der vorhergehenden Ansprüche, **dadurch gekennzeichnet, dass** das Kältespeichermedium (16; 26) durch organische Hydrate gebildet ist oder dass als Kältespeichermedium (6) eine Salzlösung insbesondere mit LiClO₃·3H₂Overwendet wird.

11. Wärmetauscher nach Anspruch 10, **dadurch gekennzeichnet, dass** das Kältespeichermedium (16; 26) durch Decanol, Tetradecan, Pentadecan und/oder Hexadecan gebildet ist.

12. Wärmetauscher nach einem der vorhergehenden Ansprüchen, **dadurch gekennzeichnet, dass** die Phasenumwandlungstemperatur des Kältespeichermediums (6; 16; 26) in einem Bereich von 0°C bis 30°C, insbesondere von 5°C bis 20°C, insbesondere bevorzugt von 10°C bis 15°C, liegt.

13. Wärmetauscher nach einem der vorhergehenden Ansprüchen, **dadurch gekennzeichnet, dass** im Inneren des Kältespeicherelements (5) eine Einlage vorgesehen ist.

14. Wärmetauscher nach Anspruch 13, **dadurch gekennzeichnet, dass** die Einlage durch ein Rippenblech (101), eine Turbulenzeinlage, ein Gestrick, ein Vlies (102) oder einen Schaum (103) gebildet ist.

15. Wärmetauscher nach Anspruch 13 oder 14, **dadurch gekennzeichnet, dass** die Einlage aus Metall, insbesondere Aluminium, oder aus Kunststoff besteht.
